# NEW EUROPEAN PATENT SPECIFICATION

(11) **EP 1 369 384 B2**
(45) Date of publication and mention of the opposition decision: **12.08.2009**
(45) Mention of the grant of the patent: 11.10.2006
(21) Application number: 03012929.0
(22) Date of filing: 06.06.2003
(51) Int. Cl.: C02F 1/467

(54) **Method of decomposing organic compound in liquid to be treated**
Verfahren zum Abbau organischer Verbindungen in zu behandelnder Flüssigkeit
Procédé de décomposition de substances organiques dans des liquides à traiter

(30) Priority: 07.06.2002 JP 2002167068
(43) Date of publication of application: 10.12.2003
(73) Proprietor: PERMELEC ELECTRODE LTD., Fujisawa-shi, Kanagawa 252-0816 (JP)
(72) Inventor: Furuta, Tsuneto, Fujisawa-shi, Kanagawa 252-0816 (JP); Nishiki, Yoshinori, Fujisawa-shi, Kanagawa 251-0052 (JP); Sekimoto, Masao, Yamato-shi, Kanagawa 242-0024 (JP); Tanaka, Hozumi, Ebina-shi, Kanagawa 243-0432 (JP); Wakita, Shuhei, Fujisawa-shi, Kanagawa 251-0043 (JP)
(74) Representative: Grünecker, Kinkeldey, Stockmair & Schwanhäusser Anwaltssozietät

(56) References cited:
- EP-A- 0 638 522
- EP-A1- 0 659 691
- DD-A- 281 095
- DE-A- 4 430 391
- DE-A1- 19 948 184
- DE-B- 3 038 914
- JP- - 07 299 467
- US-B1- 6 171 551
- JUTTNER K ET AL: "Electrochemical approaches to environmental problems in the process industry" ELECTROCHIMICA ACTA, ELSEVIER SCIENCE PUBLISHERS, BARKING, GB, vol. 45, no. 15-16, May 2000 (2000-05), pages 2575-2594, XP004206803 ISSN: 0013-4686
- RODRIGO,M.A. ET AL: 'Oxidation of 4-Chlorophenol at Boron-Doped Diamond Electrode for Wastewater Treatment' JOURNAL OF THE ELECTROCHEMICAL SOCIETY vol. 148, no. 5, 2001, pages D60 - D64
- MICHAUD, P.A. ET AL.: 'Preparation of Peroxodisulfuric Acid using Boron-Doped Diamond Thin Film Electrodes' ELECTROCHEMICAL AND SOLID-STATE LETTERS vol. 3, no. 2, 2000, pages MICH1 - 3
- 'Anorganische Chemie', 1969, FRIEDR.VIEWEG & SOHN, BRAUNSCHWEIG article HOFFMANN, K.A., page 335

## Description

### FIELD OF THE INVENTION

The present invention relates to a method for decomposing an organic compound contained in a liquid to be treated, e.g., a wastewater, into low-molecular compounds.

### DESCRIPTION OF THE RELATED ART

Biological treatment processes, adsorption processes with activated carbon, and flocculation processes are extensively utilized in order to enable industrial and household wastewaters, which contain various organic compounds, to be discharged into rivers and the like. However, these processes necessitate a secondary treatment for sludge because they yield sludge in large quantity, and methods for this secondary treatment have posed a serious social problem.

The essence of the problem resides in that such treatment processes heretofore in use are intended not to decompose harmful substances but to separate and remove harmful substances from the wastewater to be treated. In the biological treatment processes represented by the activated sludge process, organic compound contained in the wastewater to be treated is decomposed. However, since this decomposition is based on the growth of a microorganism, it has been necessary to discharge part of the grown microorganism as a sludge. In addition, organic compound represented by endocrine disruptors, trihalomethanes, and dioxins are poorly biodegradable and re not decomposed by the biological treatment processes. Organic compound represented by phenol inhibits the activity of microorganisms and hence poses a problem in inhibiting the treatment itself. Another problem is that when the wastewater to be treated has a high organic compound concentration, the activity of the microorganism is inhibited.

Recently, a process for chemical oxidation treatment, a process for electrochemical treatment, and the like have been proposed as methods for decomposing and removing organic compound contained in a wastewater to be treated and for thereby eliminating those problems. These processes each include oxidatively decomposing organic compound contained in wastewater to convert it into lower-molecular substances and discharging part or all of the lower-molecular substances as carbon dioxide from the system.

As the process for chemical oxidation treatment, a method based on the Fenton reaction or a method based on an oxidation reaction using hypochlorous acid is utilized.

The Fenton reaction is utilized for the treatment of wastewater difficult to treat biologically, in order to efficiently decompose poorly decomposable substances difficult to treat biologically. However, these methods have a problem in that the iron ion used as a catalyst becomes a sludge after the treatment reaction, and no essential solution for a reduction in sludge amount has been achieved.

The method based on an oxidation reaction using hypochlorous acid also is extensively utilized. However, this method has a safety problem in that hypochlorous acid, which is harmful and dangerous, must be transported to and stored at the treatment site. In addition, the possibility of secondary pollution has recently been pointed out because harmful organochlorine compounds represented by trihalomethanes may be generated in the course of the reaction of hypochlorous acid with organic compound.

Another method of the process for chemical oxidation treatment is disclosed in JP-A-6-99181. This method comprises adding a peroxosulfuric acid salt as an oxidizing agent to wastewater which contains an organic compound and heating the resultant mixture. In this method, no organochlorine compounds are generates and no sludge is yielded through the decomposition treatment because the peroxosulfuric acid salt changes into a sulfuric acid salt. This method, however, poses a safety problem because the peroxosulfuric acid salt is directly added and, hence, it is necessary to store the peroxysulfuric acid salt, which is a powerful oxidizing agent, in a large amount.

As the process for electrochemical treatment, two methods have been proposed. One method comprises electrochemically synthesizing an oxidizing agent and oxidatively decomposing organic compound contained in wastewater with the synthesized oxidizing agent. The other method comprises oxidatively decomposing organic compound by an electrochemical reaction.

Examples of the former method include the inventions described in JP-A-11-216473 and JP-A-2000-79394.

JP-A-11-216473 discloses a method of electrochemically treating an organic compound-containing wastewater containing chloride ion. Specifically, this method comprises anodizing chloride ion to yield hypochlorous acid and oxidatively decomposing the organic compound with the acid. Although there is no need of transporting or storing hypochlorous acid, which is harmful and dangerous, in utilizing hypochlorous acid in this method, the problem concerning the generation of harmful organochlorine compounds remains unsolved.

JP-A-2000-79394 proposes a method in which a chloride is used as an electrolyte to yield hydroxy radicals in a first electrolytic cell and in a second electrolytic cell organic compound is decomposed by the oxidizing ability of the hydroxy radicals. This method does not utilize hypochlorous acid as an oxidizing agent. However, because hypochlorous acid participates in the course of hydroxy radical synthesis, harmful organochlorine compounds may be generated in this method. In addition, this method has a disadvantage from the standpoint of profitability because the efficiency of hydroxy radical generation is low.

The method comprising oxidatively decomposing organic compound by an electrochemical reaction, on the other hand, is explained in, e.g., Denki Kagaku, Vol.62, 1084- (1992) and Journal of Applied Electrochemistry, Vol.21, 99-104 (1992). However, for putting this method to practical use, it is necessary to select an anode material which has practical durability and does not suffer dissolution or the like which may cause secondary pollution. Examples of anodes which can be selected include lead oxide, tin oxide, platinum, DSA, and carbon. However, the lead oxide electrode may dissolve away during electrolysis stoppage, while the tin oxide electrode is difficult to use over a long period of time because the interface between the tin oxide and the base is passivated. Carbon also is difficult to use over a long period of time because it is oxidatively consumed. Consequently, anodes which are practically usable are limited to platinum electrodes and noble-metal-covered metal electrodes represented by DSA. However, these electrodes, although usable over a long period of time, have the following problem. Since they have a low oxygen overvoltage, the reaction generating oxygen from water is preferential and there are often cases where the substance to be eliminated cannot be decomposed or the rate of decomposition is low. Consequently, use of such electrodes has hardly spread because of their low profitability.

A technique for overcoming the problem associated with platinum electrodes and noble-metal-covered electrodes is disclosed in JP-A-7-299467. This technique comprises utilizing an anode containing conductive, crystalline, doped diamond. Although this technique is equal to existing methods in the electrochemical oxidative decomposition of solute in a wastewater, an essential difference resides in that an anode containing conductive, crystalline, doped diamond is used. That reference teaches that the wastewater to be treated should have an ionic strength, i.e., ionic conductivity, sufficient for electrochemical treatment. It further discloses that in the case of a wastewater deficient in ionic conductivity, an electrolyte is added in order to compensate for this deficiency. This related-art technique has been improved in electrode stability and decomposition of organic compound as compared with existing methods of electrochemical oxidative decomposition of organic compound. However, mitigation of the problem concerning profitability is insufficient and this inhibits the technique from expanding use. The document EP 0 638 522 A discloses a method for treating process streams and wastewater in which peroxosulfates and peroxosulfuric acids are produced at the anode and used for the oxidation of oxidisable compounds.

M. A. Rodrigo et.al., "Oxidation of 4-Chlorophenol at Boron-Doped Diamond Electrode for Wastewater Treatment; Journal of the Electrochemical Society, 148(5), D60-D64 (2001) relates to the anodic oxidation of 4-chlorophenol on the surface of synthetic diamond film electrodes in a sulfuric acid medium.

As described above, the wastewater treatments heretofore in use, in particular, the treatments for decomposing organic compound contained in wastewater, have the following drawbacks: (1) since the organic compound is converted to a sludge or the like, a secondary treatment is necessary to remove the sludge that is generated; (2) since an oxidizing agent containing chlorine atom, e.g., hypochlorous acid, is used, a poisonous organochlorine compound is apt to generate; and (3) in the electrochemical decomposition of organic compound in wastewater, an anode employing platinum or a noble-metal oxide as an electrode material is frequently used but this anode has a low oxygen overvoltage and hence causes oxygen gas evolution in preference to organic compound decomposition, i.e., the organic compound is less apt to be decomposed.

The method described above in which a peracid is added to a wastewater containing organic compound to oxidatively decompose the organic compound poses a problem concerning safety because the peracid or a salt thereof, which is a powerful oxidizing agent, is handled in a large amount.

### SUMMARY OF THE INVENTION

Accordingly, an object of the invention is to provide a simple, safe, and economical method of wastewater treatment in which organic compound contained therein is decomposed to low-molecular compounds and which neither yields solid by-product, e.g., a sludge, nor necessitates the storage of a highly dangerous oxidizing agent.

The present inventors made intensive investigations of the above-noted problems. As a result, they have found that when a conductive-diamond electrode is used together with oxoacid ions such as, e.g., sulfate ions as an electrolyte in electrochemically treating a raw liquid, e.g., an organic compound-containing wastewater, to decompose the organic compound to low-molecular compounds, then the oxoacid ion not only imparts ionic conductivity to the raw liquid but is also oxidized to a peracid, e.g., peroxosulfuric acid, and this peracid chemically oxidatively decomposes the organic compound in the raw liquid. The invention has been achieved based on this finding.

The invention provides a method of decomposing organic compound contained in a liquid to be treated which comprises adding at least one oxoacid to the liquid to be treated, electrochemically synthesizing at least one peracid therefrom, and oxidatively decomposing the organic compound with the peracid. The invention includes a mode in which the organic compound contained in the liquid to be treated not only is decomposed with the peracid produced electrochemically, but also is electrochemically decomposed by contact with an electrode, in particular, the anode.

### BRIEF DESCRIPTION OF THE DRAWINGS

The foregoing and other objects and advantages of the invention will be apparent from the following detailed description and the accompanying drawings, in which:
Fig. 1 is a diagrammatic view illustrating an example of an electrolytic cell for use in the method of the invention for decomposing organic compound contained in a liquid to be treated;
Fig. 2 is a diagrammatic view illustrating another example of the electrolytic cell;
Fig. 3 is a graphic presentation showing changes in TOC with the quantity of electricity in Example 1 and Comparative Examples 1 and 2; and
Fig. 4 is a graphic presentation showing changes in IC with the quantity of electricity in Examples 1 and 2 and Comparative Example 1.

### DETAILED DESCRIPTION OF THE INVENTION

The term "oxoacid" as used herein includes carbonic acid and phosphoric acid. Preferably, "oxoacid" means a compound in which one or more oxygen atoms are bonded to the central atom and hydrogen is bonded to part or all of the oxygen atoms, and which assumes the nature of an acid when the hydrogen generates hydrogen ion in aqueous solution. In this context, "oxoacid" can include salts or ions of these oxoacids. Arsenic acid or chloric acid, which are highly toxic oxoacids, desirably should not be used.

The term "peracid" as used in the invention includes peroxocarbonic acid and peroxophosphoric acid. In this context, "peracid" can include salts or ions of these peracids.

In general, when a raw liquid containing organic compound, e.g., wastewater, is electrochemically treated, the following oxygen evolution reaction due to the electric discharge of water takes place

2H₂O → O₂ + 4H⁺ + 4e⁻ (1)

together with organic compound decomposition reactions. An example thereof is shown below as scheme (2).

CₓH_{y}O_{z} + (2x-z)H₂O → xCO₂ + (4x+y-2z)H⁺ + (4x+y-2z)e⁻ (2)

In wastewater treatment, the oxygen evolved by the reaction shown by scheme (1) is mostly discharged without being utilized. Consequently, this reaction is inefficient in terms of the electric power that is consumed. This is one of the causes of the problem concerning profitability in electrochemical wastewater treatment.

In the case where the wastewater containing organic compound contains an oxoacid, a peracid-generating reaction takes place besides the reactions shown by schemes (1) and (2). Some examples of such reactions in which a peracid is electrochemically generated are shown below as schemes (4) to (5).
2CO₃²⁻ → C₂O₆²⁻ + 2e⁻ (4)

2PO₄³⁻ → P₂O₈²⁻, + 2e⁻ (5)

Peracids include those in which part or all of the -OH group(s) bonded to the central atom of the oxoacid have been replaced by a -O₂H group, e.g., peroxomonosulfuric acid, and those in which the central atom of one molecule of the oxoacid has been bonded to the central atom of another molecule through an -O-O-bond to form a dimer, e.g., peroxodisulfuric acid. In the invention, however, these two kinds of acids are inclusively referred to as peracids. These peracids have a powerful oxidizing ability and, hence, oxidatively decompose organic compound contained in wastewater. An example is shown below as scheme (6).

CₓH_{y}O_{z} + (2x+y/2-z)S₂O₈²⁻ → xCO₂ + (4x+y-2z)H⁺ + (4x+y-2z)SO₄²⁻ (6)

The hydroxyl radicals and hydrogen peroxide which have been generated by the hydrolysis of such a peracid also have an oxidizing ability and, hence, oxidatively decompose organic compound in the wastewater. An example is shown below as schemes (7) and (8).

P₂O₈⁴⁻ + 2H₂O → 2PO₄³⁻ + 2H⁺ + H₂O₂ (7)

CₓH_{y}O_{z} + (2x+y/2-z)H₂O₂ → xCO₂ + (2x+y-z)H₂O (8)

Since a peracid oxidatively decomposes organic compound as shown above, the electric power consumed by generation of the peracid in the wastewater treatment is not ineffective. Consequently, when the electrochemical generation of a peracid is conducted simultaneously with the oxygen evolution described above or in preference to the oxygen evolution, then efficient wastewater treatment is possible.

In the case where the wastewater contains an alkali such as, e.g., sodium hydroxide, carbon dioxide is generated in the invention by the electrochemical reaction of organic compound shown by scheme (2), and this carbon dioxide reacts with the alkali to generate an oxoacid. An example is shown below as schemes (9) and (10).

CO₂ + 2OH⁻ → CO₃²⁻ + H₂O (9)

CO₂ + OH⁻ → HCO₃⁻ (10)

The oxoacid thus generated also can serve as a material for generating a peracid as described above and thereby enables efficient wastewater treatment. Consequently, the presence of alkali in the wastewater produces the same effect as the addition of an oxoacid.

When the wastewater treatment is practical in an embodiment thereof, the electrochemical oxidative decomposition of an organic compound, electrochemical oxidative synthesis of a peracid, oxidative decomposition of an organic compound with the peracid, hydrolysis of the peracid, and oxidative decomposition reaction of an organic compound with a product of the hydrolysis, which have been shown above by schemes (2) to (8), proceed simultaneously. In addition, these reactions each proceed in steps. It is therefore impossible to specify the degree of contribution of each reaction. However, the Examples below clearly demonstrate that the treatment efficiency of wastewater is improved by incorporating an oxoacid into the wastewater to be treated and treating this wastewater using a conductive-diamond electrode at least as the anode.

When an electrode having an especially low oxygen overvoltage is used in a temperature range, oxoacid concentration range, and current density range which are practical in wastewater treatment, then the electric power supplied is preferentially used for oxygen evolution by water electrolysis and cannot be used for the electrolytic generation of a peracid by oxoacid oxidation and for the electrochemical decomposition of an organic compound contained in the liquid being treated. In this case, the object of the invention is not accomplished. Consequently, such an electrode, e.g., a platinum electrode or a noble-metal oxide electrode, is not used in the invention.

A conductive-diamond electrode for use in the invention is produced by depositing, on an electrode base, diamond which is a deposit formed by reducing an organic material serving as a carbon source. The material and shape of the base are not particularly limited as long as the material is electrically conductive. For example, use can be made of a base which is made of conductive silicon (single-crystalline, polycrystalline, amorphous, etc.), silicon carbide, titanium, niobium, tantalum, carbon, nickel, or the like and is in the form of a plate, mesh, rod, pipe, sphere such as, e.g., beads, or porous plate, e.g., chatter fiber sinter. Methods for depositing diamond on the base also are not particularly limited and any desired one can be used. Typical diamond production processes include the hot-filament CVD (chemical vapor deposition) process, microwave plasma CVD process, plasma arc jet process, and physical vapor deposition (PVD) process. Although each process employs a hydrogen/carbon source mixed gas as a raw material for producing diamond, an element having a different valence is added in a slight amount in order to impart electrical conductivity to the diamond. The element to be added in a slight amount is preferably boron, phosphorus, or nitrogen, and the content thereof is preferably from 1 to 100,000 ppm, more preferably from 100 to 10,000 ppm. Also usable besides these are a synthetic diamond powder produced from a carbon powder at an ultrahigh pressure and an electrode obtained by depositing the diamond powder on a base using a binder such as a resin.

The electrolytic cell to be used for the treatment may be a single-chamber electrolytic cell which has no separator and which has only an anode and a cathode disposed therein, or a two-chamber electrolytic cell in which the space between the anode and the cathode has been partitioned into an anode chamber and a cathode chamber with a separator such as a magnetic diaphragm or an ion-exchange membrane. Whether a separator is present or not and the material of the cathode may be suitably determined according to the properties of the liquid to be treated and from the standpoint of operation.

Conditions for the electrochemical treatment in which organic compound is decomposed with a conductive-diamond electrode are not particularly limited. However, from the standpoint of efficiently conducting the electrochemical oxidative decomposition of an organic compound and the electrochemical synthesis of a peracid, the current density is preferably from 0.01 to 20 A/dm² and the electrolysis temperature is preferably from 5 to 40°C. Although the oxoacid concentration in the wastewater to be treated may be suitably determined from the standpoint of profitability, the Examples below show that an oxoacid concentration lower than 0.5 mol/L suffices from the standpoint of treatment efficiency. In the case of adding an oxoacid, the purity thereof is not particularly limited.

In the case where an oxoacid discharged as another wastewater near the liquid to be treated can be utilized, it is especially preferred to use this acid from the standpoint of profitability. It is also possible to utilize a solution prepared by dissolving a waste gas containing carbon dioxide or a sulfur oxide gas. Whether organic compound contained is decomposed and removed by the method of the invention to such a level that the treated effluent can be discharged into rivers or the organic compound is decomposed and removed by the method of the invention to such a concentration level capable of treatment by another method such as, e.g., aerobic treatment, may also be determined from the standpoint of profitability.

Embodiments of electric cells that may be used for practicing the method of organic compound decomposition of the invention will be explained below by reference to accompanying drawings. However, the invention should not be construed as being limited to modes using these embodiments.

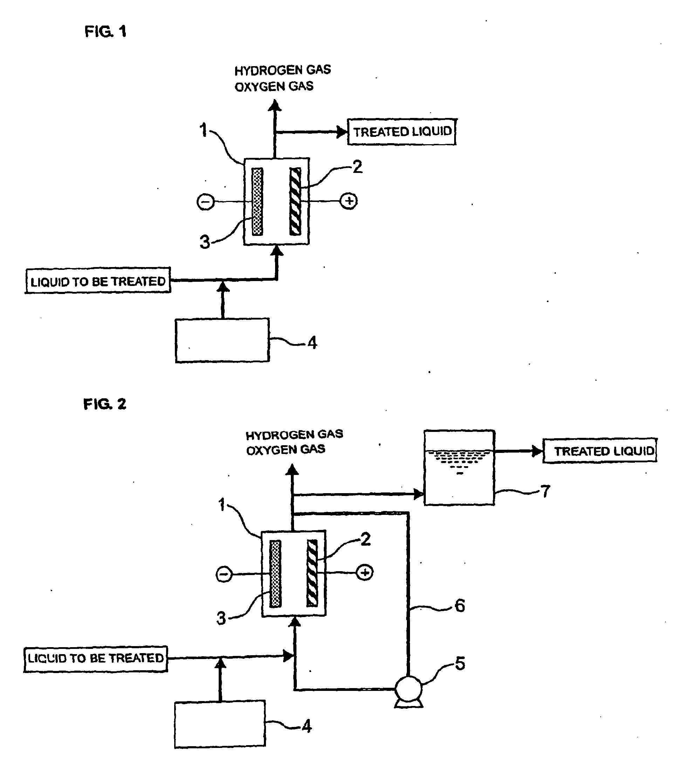

Figs. 1 and 2 are diagrammatic views respectively illustrating first and second electrolytic cells usable for the organic compound decomposition method of the invention.

The electrolytic cell 1 shown in Fig. 1 is a single-chamber electrolytic cell employing no separator. The electrolytic cell 1 has an anode 2 and a cathode 3 inside, which have been disposed apart from each other. In the case where the liquid to be treated, e.g., wastewater, does not contain an oxoacid, an oxoacid is added thereto in a feed line from an oxoacid addition device 4, which may be, for example, a tank containing an aqueous solution of an oxoacid, before the liquid to be treated is supplied to the electrolytic cell 1.

On the anode 2, the following reactions proceed: (1) electrochemical oxidative organic compound decomposition in which organic compound contained in the liquid to be treated comes into direct contact with the anode and is thus decomposed; (2) a reaction in which the oxoacid contained in the liquid to be treated is anodized to yield a peracid; and (3) a reaction in which oxygen is evolved by ordinary water electrolysis.

On the cathode 3, the following reactions proceed: (1) electrochemical reductional organic compound decomposition in which organic compound contained in the liquid to be treated comes into direct contact with the cathode and is thus decomposed; (2) a reaction in which hydrogen is evolved by ordinary water electrolysis; and (3) a reaction in which part of the peracid generated on the anode 2 is reduced to yield an oxoacid.

Other reactions proceeding in the whole electrolytic cell 1 besides those reactions are: (1) a reaction in which organic compound is oxidatively decomposed by the peracid; (2) a peracid hydrolysis reaction; and (3) a reaction in which organic compound is oxidatively decomposed by a product of the hydrolysis.

In the case where a two-chamber electrolytic cell partitioned into an anode chamber and a cathode chamber with a separator is used in place of the electrolytic cell shown in Fig. 1, the liquid to be treated, e.g., wastewater, is treated in any of the following manners: (1) the wastewater is passed through the cathode chamber and then through the anode chamber; (2) the wastewater is passed through the anode chamber and then through the cathode chamber; and (3) the wastewater is passed through the anode chamber only. However, it is necessary to pass the wastewater through at least the anode chamber.

In such a two-chamber electrolytic cell, it is possible to prevent the peracid generated on the anode from suffering reductional decomposition on the cathode, so as to prevent efficiency from being lowered by cathodic reduction of the peracid. On the other hand, however, the use of a separator poses new problems concerning fouling, durability, etc., of the separator.

Problems caused by the separator are attributable to properties of the wastewater to be treated. Consequently, whether a separator is to be used or not may be determined from the standpoint of profitability while taking account of the properties of the liquid to be treated.

Circulating the electrolytic solution in the single-chamber electrolytic cell or circulating the anolyte in the two-chamber electrolytic cell enables organic compound and the oxoacid in the raw liquid to have a larger chance of contacting with the anode 2. This circulation can hence be expected to improve the efficiency of the electrochemical treatment. Furthermore, since circulation enables the peracid and the peracid hydrolyzate to have a larger chance of contacting with organic compound, it is effective also in improving the efficiency of chemical decomposition reactions.

Fig. 2 shows an example of an apparatus which comprises a single-chamber electrolytic cell 1, a circulation line 6 having an electrolytic-solution circulation pump 5 for circulating an electrolytic solution to the electrolytic cell, and a residence tank 7 in which the electrolytic solution removed from the electrolytic cell 1 resides. In this electrolytic cell, a residence time for decomposition reactions of organic compound with the peracid and peracid hydrolyzate in the residence tank disposed after the electrolytic cell can be secured to thereby improve the treatment efficiency.

Examples of the method of decomposing an organic compound in a raw liquid according to the invention will be described below together with Comparative Examples. However, the invention should not be construed as being limited to these Examples. In the following Examples and Comparative Examples, 2-aminoethanol and phenol were used as organic compound contained in wastewater. However, the organic compound which can be decomposed by the invention is not limited to these.

### EXAMPLE 1

An electrode obtained by depositing conductive diamond on a 1 mm thick single-crystal silicon base by the hot-filament CVD process was used as each of an anode and a cathode. These electrodes were disposed in a separator-free single-chamber electrolytic cell at an electrode-to-electrode distance of 1 mm to fabricate an electrolytic cell. An aqueous solution containing 4.5 g/liter of 2-aminoethanol as an organic compound and 0.07 mol/liter sodium carbonate as an oxoacid ion source was circulated as a raw liquid through the electrolytic cell at a flow rate of 0.5 liter/min to conduct an electrochemical treatment at a current density of 10 A/dm². The total treatment time was 150 minutes and the quantity of electricity passed through the cell was 35 Ah/liter. The amount of the organic compound present in the liquid being treated was measured in terms of total organic-carbon amount (TOC). The initial value of TOC was 1,899 mg/liter, whereas the TOC after the electrochemical treatment was not higher than 4 mg/liter, which was the detection limit for the detector. It was thus ascertained that the organic compound could be decomposed to such a level that the treated effluent could be discharged into rivers.

### COMPARATIVE EXAMPLE 1

An electrochemical treatment was conducted in the same manner as in Example 1, except that perchloric acid was added in place of sodium carbonate in a concentration of 0.07 mol/liter. The total treatment time was 240 minutes and the quantity of electricity passed through the cell was 58.3 Ah/liter. The initial TOC was 1,711 mg/liter, whereas the TOC after the treatment was 66 mg/liter.

### COMPARATIVE EXAMPLE 2

An electrochemical treatment was conducted in the same manner as in Example 1, except that a platinum electrode was used as each of the anode and cathode in place of the conductive-diamond electrode. The total treatment time was 240 minutes and the quantity of electricity passed through the cell was 58.3 Ah/liter. The initial TOC was 1,783 mg/liter, whereas the TOC after the treatment was 260 mg/liter.

### Changes in TOC Amount in Example 1 and Comparative Examples 1 and 2

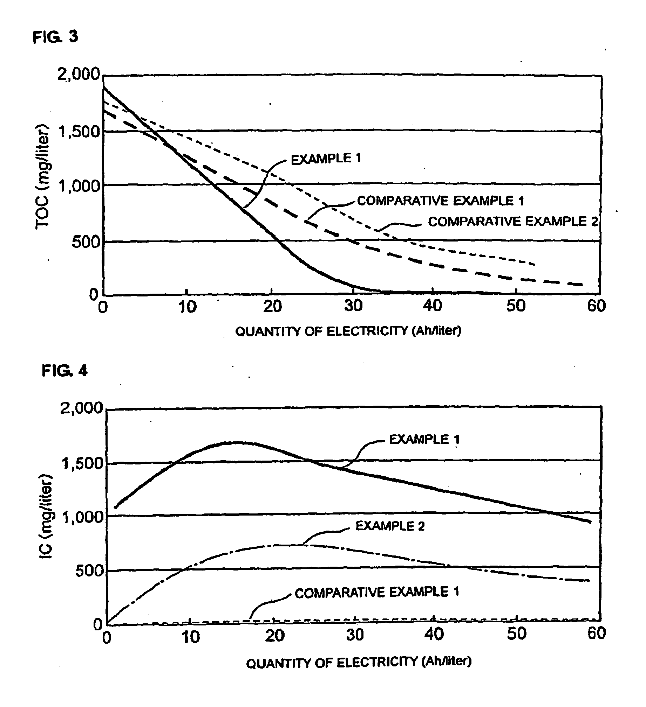

The change in TOC with the quantity of electricity passed through the cell was determined in each of Example 1 and Comparative Examples 1 and 2 under the same conditions. The results obtained are shown by the graphs in Fig. 3.

In Comparative Example 1, in which a conductive-diamond electrode was used and perchlorate ion, which is stable in aqueous solution and has a relatively low oxidizing ability, was used as an electrolyte, the raw liquid could be treated only to a TOC of 66 mg/liter even when the quantity of electricity was 58.3 Ah/liter. In contrast, in Example 1, in which sodium carbonate, which is an oxoacid, was used as an electrolyte, the TOC had decreased to or below 4 mg/liter when the quantity of electricity reached 35 Ah/liter. The rate of TOC reduction in Example 1 was higher than in Comparative Example 1. It was thus demonstrated that organic compound is efficiently decomposed by using an oxoacid.

Furthermore, in Comparative Example 2, in which an oxoacid was used as an electrolyte and a platinum electrode was used, the TOC after treatment was 260 mg/liter when the quantity of electricity was 58.3 Ah/liter. The rate of treatment in Comparative Example 2 was even lower than in Comparative Example 1, showing that the treatment with the platinum electrode failed to decompose the organic compound to such a level that the treated effluent could be discharged into rivers.

### EXAMPLE 2

An electrochemical treatment was conducted in the same manner as in Example 1, except that sodium hydroxide was added in place of sodium carbonate in a concentration of 0.07 mol/liter. The total treatment time was 150 minutes and the quantity of electricity was 35 Ah/liter. The initial TOC was 1,621 mg/liter, whereas the TOC after the electrochemical treatment was not higher than 4 mg/liter.

### Changes in Inorganic Carbon (IC) Amount in Examples 1 and 2 and Comparative Example 1

The change in inorganic carbon amount (concentration of carbonate ions or hydrogen carbonate ions) with the quantity of electricity passed through the cell was determined in each of Examples 1 and 2 and Comparative Example 1 under the same conditions. The results obtained are shown by the graphs in Fig. 4.

In Example 1, in which carbonate ion was added as an electrolyte, the IC was about 1,000 mg/liter or higher. In Example 2, in which sodium hydroxide was added as an electrolyte, the initial value of IC was 0 mg/liter because neither carbonate ion nor hydrogen carbonate ion had been added, whereas the IC value was 600 mg/liter or higher when the quantity of electricity reached 20 Ah/liter. It was thus ascertained that carbonate ion or hydrogen carbonate ion had been generated as oxoacid ion in the liquid being treated. In the case where the liquid being treated is alkaline, the carbon dioxide generated by the decomposition of the organic compound reacts with the alkali to become an oxoacid and is then oxidized into peroxocarbonate ion on the conductive diamond anode. The same effect as that produced by the addition of an oxoacid is hence obtained. Thus, the organic compound could be decomposed to such a level that the treated effluent could be discharged into rivers, as in Example 1.

On the other hand, in Comparative Example 1, in which perchlorate ion was added, the IC increased little, i.e., the generation of oxoacid ion was not observed. The treatment efficiency in Comparative Example 1 was lower than in Example 1, in which an oxoacid was added, and in Example 2, in which an alkali was added to generate an oxoacid in the liquid being treated, so that the organic compound could not be decomposed to such a level that the treated effluent could be discharged into rivers.

### EXAMPLE 3

An electrochemical treatment was conducted in the same manner as in Example 1, except that the rate of circulation of the liquid being treated was changed to 0.1 liter/min. The initial TOC was 1,768 mg/liter and the TOC after the treatment was 22.5 mg/liter. This TOC value after the treatment was higher than in Example 1.

In Example 3, in which such a reduced circulation rate was used, the electrochemical treatment reduced the TOC, i.e., decomposed and removed the organic compound. However, the rate of TOC reduction was lower than in Example 1, in which a higher circulation rate was used. It was thus ascertained that circulation of the raw liquid through the electrolytic cell is effective in improving the efficiency of electrochemical treatment of organic compound.

### COMPARATIVE EXAMPLE 4

An electrode obtained by depositing conductive diamond on a 2 mm thick metal plate made of niobium by the hot-filament CVD process was used as each of an anode and a cathode. These electrodes were disposed in a separator-free single chamber electrolytic cell at an electrode-to-electrode distance of 5 mm to fabricate an electrolytic cell.

An aqueous solution containing 4.5 g/liter 2-aminoethanol as an organic compound and 0.07 mol/liter sodium sulfate as an oxoacid ion source was fed to the electrolytic cell and electrochemically treated at a current density of 12.5 A/dm². The total treatment time was 360 minutes and the quantity of electricity passed through the cell was 22.2 Ah/liter. The initial value of TOC was 1,872 mg/liter, whereas the TOC after the treatment was 845 mg/liter. The treatment efficiency, in terms of TOC reduction per unit quantity of electricity, was 46.2 mg/Ah.

### COMPARATIVE EXAMPLE 5

An electrochemical treatment was conducted in the same manner as in Comparative Example 4, except that the concentration of sodium sulfate was changed to 0.5 mol/liter. The initial TOC was 1,917 mg/liter, whereas the TOC after the treatment was 801 mg/liter. The treatment efficiency was 50.2 mg/Ah.

### COMPARATIVE EXAMPLE 6

An electrochemical treatment was conducted in the same manner as in Comparative Example 4, except that sodium carbonate was added as an oxoacid ion source in a concentration of 0.07 mol/liter. The initial TOC was 2,083 mg/liter, whereas the TOC after treatment was 839 mg/liter. The treatment efficiency was 56.0 mg/Ah.

### COMPARATIVE EXAMPLE 7

An electrochemical treatment was conducted in the same manner as in Comparative Example 4, except that perchloric acid was added in place of the sodium sulfate in a concentration of 0.07 mol/liter. The initial TOC was 2,007 mg/liter, whereas the TOC after the treatment was 1,320 mg/liter. The treatment efficiency was 30.9 mg/Ah.

### COMPARATIVE EXAMPLE 8

An electrochemical treatment was conducted in the same manner as in Comparative Example 4, except that a platinum electrode was used as each of the anode and cathode in place of the conductive-diamond electrode, and the amount of the sodium sulfate as an oxoacid ion source was changed to 0.5 mol/liter. The initial TOC was 1,827 mg/liter, whereas the TOC after the treatment was 1,680 mg/liter. The treatment efficiency was 19.7 mg/Ah.

### COMPARATIVE EXAMPLE 9

An electrochemical treatment was conducted in the same manner as in Comparative Example 4, except that a platinum electrode was used as each of the anode and cathode in place of the conductive diamond electrode, and perchloric acid was added in place of sodium sulfate in a concentration of 0.07 mol/liter. The initial TOC was 2,030 mg/liter, whereas the TOC after the treatment was 1,772 mg/liter. The treatment efficiency was 11.6 mg/Ah.

The results obtained in Comparative Examples 3 to 9 are summarized in Table 1.

**TABLE 1**

| | Kind of Electrode | Organic matter | Electrolyte | | TOC | | Treatment efficiency (mg/Ah) |
|---|---|---|---|---|---|---|---|
| | | | Kind of ion added | Concentration (mol/liter) | Initial value (mg/liter) | After treatment (mg/liter) | |
| Comparative Example 4 | Diamond | mEtA | SO₄²⁻ | 0.07 | 1,872 | 845 | 46.2 |
| Comparative Example 5 | Diamond | mEtA | SO₄²⁻ | 0.5 | 1,917 | 801 | 50.2 |
| Comparative Example 6 | Diamond | mEtA | CO₃²⁻ | 0.07 | 2,083 | 839 | 56.0 |
| Comparative Example 7 | Diamond | mEtA | ClO₄⁻ | 0.07 | 2,007 | 1,320 | 30.9 |
| Comparative Example 8 | Pt | mEtA | SO₄²⁻ | 0.5 | 1,827 | 1,680 | 19.7 |
| Comparative Example 9 | Pt | mEtA | ClO₄⁻ | 0.07 | 2,030 | 1,772 | 11.6 |

| | | | | | | | |
|---|---|---|---|---|---|---|---|
| mEtA: 2-aminoethanol | | | | | | | |

Comparative Examples 4 to 6, which used an oxoacid as an electrolyte and a conductive-diamond electrode, showed a larger TOC reduction than Comparative Example 8, which used an oxoacid as an electrolyte and a platinum electrode. This indicates that use of the conductive diamond electrode improved the treatment efficiency.

Furthermore, Comparative Examples 4 to 6, which used sulfate ion or carbonate ion as an oxoacid serving as an electrolyte, each showed a larger TOC reduction than Comparative Example 7, which used perchlorate ion as an electrolyte. This indicates that an oxoacid is effective in improving efficiency.

On the other hand, in the case where the platinum electrode shown in Comparative Examples 8 and 9 was used, the efficiency-improving effect of an oxoacid was lower than in the case of using the diamond electrode. This indicates that a combination of an oxoacid with the diamond electrode is especially effective.

These results show that a peracid was generated from the oxoacid and, simultaneously therewith, oxidative decomposition of the organic compound by the peracid and/or by a product of hydrolysis of the peracid proceeded, and that the conductive diamond electrode yielded a peracid capable of contributing to an improvement in the efficiency of organic compound decomposition.

In general, in electrochemical reactions, a higher reactant concentration is expected to result in a higher efficiency of target-compound production. In the invention also, a higher oxoacid concentration is expected to result in a higher efficiency of the synthesis of a peracid contributing to organic compound decomposition.

However, Comparative Example 4, in which the oxoacid concentration was 0.07 mol/liter, differed little in treatment efficiency from Comparative Example 5, in which the oxoacid concentration was 0.5 mol/liter. This indicates that an oxoacid concentration of 0.5 mol/liter suffices for improving the efficiency of organic compound decomposition.

Comparative Example 7, which used perchlorate ion as an electrolyte and a conductive diamond electrode, showed a higher treatment efficiency than Comparative Example 9, which used a platinum electrode. It was thus ascertained that the conductive diamond electrode has a higher ability to oxidatively decompose organic compound through electrochemical reactions than the platinum electrode.

### EXAMPLE 4

An electrode obtained by depositing conductive diamond on a 2 mm thick metal plate made of niobium by the hot-filament CVD process was used as each of an anode and a cathode. These electrodes were disposed in a separator-free single chamber electrolytic cell at an electrode-to-electrode distance of 5 mm to fabricate an electrolytic cell. An aqueous solution containing 2.0 g/liter phenol as an organic compound and 0.07 mol/liter sodium carbonate as an oxoacid ion source was fed to the electrolytic cell and electrochemically treated at a current density of 12.5 A/dm². The total treatment time was 360 minutes and the quantity of electricity was 22.2 Ah/liter. The initial value of TOC was 1,582 mg/liter, whereas the TOC after the treatment was 42 mg/liter. The treatment efficiency was 69.3 mg/Ah.

### EXAMPLE 5

An electrochemical treatment was conducted in the same manner as in Example 4, except that sodium phosphate was added as an oxoacid ion source in a concentration of 0.5 mol/liter. The initial TOC was 1,991 mg/liter, whereas the TOC after the treatment was 394 mg/liter. The treatment efficiency was 71.9 mg/Ah.

### COMPARATIVE EXAMPLE 10

An electrochemical treatment was conducted in the same manner as in Example 4, except that perchloric acid was added in place of the sodium carbonate in a concentration of 0.07 mol/liter. The initial TOC was 1,537 mg/liter, whereas the TOC after the treatment was 513.1 mg/liter. The treatment efficiency was 46.1 mg/Ah.

### COMPARATIVE EXAMPLE 11

An electrochemical treatment was conducted in the same manner as in Example 4, except that a platinum electrode was used as each of the anode and cathode in place of the conductive diamond electrode. The initial TOC was 1,630 mg/liter, whereas the TOC after the treatment was 1,601 mg/liter. The treatment efficiency was 1.3 mg/Ah.

The results obtained in Examples 4 and 5 and Comparative Examples 10 and 11 are shown in Table 2.

**TABLE 2**

| | Kind of electrode | Organic matter | Electrolyte | | TOC | | Treatment efficiency (mg/Ah) |
|---|---|---|---|---|---|---|---|
| | | | Kind of ion added | Concentration (mol/liter) | Initial value (mg/liter) | After treatment (mg/liter) | |
| Example 4 | Diamond | ArOH | CO₃²⁻ | 0.07 | 1,582 | 42 | 69.3 |
| Example 5 | Diamond | ArOH | PO₄³⁻ | 0.5 | 1,991 | 394 | 71.9 |
| Comparative Example 10 | Diamond | ArOH | ClO₄⁻ | 0.07 | 1,537 | 513 | 46.1 |
| Comparative Example 11 | Pt | ArOH | CO₃²⁻ | 0.07 | 1,630 | 1,601 | 1.3 |

| | | | | | | | |
|---|---|---|---|---|---|---|---|
| ArOH: phenol | | | | | | | |

Examples 4 and 5, in which phenol was used as an organic compound and an oxoacid was added, showed a higher treatment efficiency than Comparative Example 10, in which a conductive-diamond electrode was used and perchloric acid was added as an electrolyte, and than Comparative Example 11, in which an oxoacid was added but a platinum electrode was used. The results given above show that the Examples according to the invention are effective methods for decomposing various organic compound contained in wastewater into low-molecular compounds.

As described above, when an oxoacid is added to a liquid to be treated, e.g., a wastewater containing an organic compound, and this raw liquid is electrochemically treated using a conductive diamond electrode as an anode according to the method of the invention, then the organic compound is electrochemically oxidized and the oxoacid also is oxidized to a peracid. Furthermore, the peracid and a product of hydrolysis of the peracid chemically oxidatively decompose the organic compound. Consequently, not only the organic compound can be decomposed without yielding a solid by-product, e.g., sludge, or generating an organochlorine compound, but also there is no need of storing a highly dangerous oxidizing agent. Thus, wastewater containing organic compound can be treated easily, safely, and economically.

## Claims

1. A method of decomposing an organic compound contained in a liquid to be treated which comprises adding at least one oxoacid to the liquid to be treated, electrochemically synthesizing at least one peracid from the oxoacid, and oxidatively decomposing the organic compound with the peracid, wherein said step for electrochemically synthesizing the peracid comprises electrolyzing the liquid to be treated containing an oxoacid with an electrolytic cell comprising an anode and a cathode, said anode comprising a conductive-diamond electrode,
wherein the oxoacid is one or more acids selected from the group consisting of carbonic acid, phosphoric acid, and salts thereof.

2. A method of decomposing an organic compound contained in a liquid to be treated which comprises adding an alkali to the liquid to be treated, electrochemically generating carbon dioxide from the organic compound through oxidative decomposition to yield carbonic acid as an oxoacid from the carbon dioxide, electrochemically synthesizing a peracid from the oxoacid, and oxidatively decomposing the organic compound with the peracid, wherein said step for electrochemically synthesizing the peracid comprises electrolyzing the liquid to be treated containing an oxoacid with an electrolytic cell comprising an anode and a cathode, said anode comprising a conductive-diamond electrode.

3. The method of claim 1, which further comprises conducting electrochemical oxidative decomposition of the organic compound.

4. The method of claim 2, wherein the oxoacid is one or more acids selected from the group consisting of sulfuric acid, carbonic acid, acetic acid, boric acid, phosphoric acid, and salts thereof, and the peracid is one or more acids selected from the group consisting of peroxosulfuric acid, peroxocarbonic acid, peroxoacetic acid, peroxoboric acid, peroxophosphoric acid, and salts of thereof.

5. The method of claim 1 or 2, which comprises adding an oxoacid or a salt thereof in an amount such that the concentration of the oxoacid in the liquid to be treated is lower than 0.5 mol/liter.

6. The method of claim 2, which comprises adding an alkali in an amount such that the concentration thereof in the liquid to be treated is lower than 0.5 mol/liter.

## Patentansprüche

1. Verfahren zum Zersetzen einer organischen Verbindung, die in einer zu behandelnden Flüssigkeit enthalten ist, umfassend das Zugeben mindestens einer Oxosäure zu der zu behandelnden Flüssigkeit, das elektrochemische Erzeugen mindestens einer Persäure aus der Oxosäure, und das oxidative Zersetzen der organischen Verbindung mit der Persäure, wobei das elektrochemische Erzeugen der Persäure das Elektrolysieren der zu behandelnden Flüssigkeit, die eine Oxosäure enthält, in einer Elektrolysezelle mit einer Anode und einer Kathode umfasst, wobei die Anode eine leitfähige Diamantelektrode umfasst, wobei die Oxosäure mindestens eine Säure umfasst, ausgewählt aus der Gruppe, bestehend aus Kohlensäure, Phosphorsäure und Salzen davon.

2. Verfahren zum Zersetzen einer organischen Verbindung, die in einer zu behandelnden Flüssigkeit enthalten ist, umfassend das Zugeben einer alkalischen Substanz zu der zu behandelnden Flüssigkeit, das elektrochemische Erzeugen von Kohlendioxid aus der organischen Verbindung durch oxidative Zersetzung, um Kohlensäure als Oxosäure aus dem Kohlendioxid zu erhalten, das elektrochemische Erzeugen einer Persäure aus der Oxosäure, und das oxidative Zersetzen der organischen Verbindung mit der Persäure, wobei das elektrochemische Erzeugen der Persäure das Elektrolysieren der zu behandelnden Flüssigkeit, die eine Oxosäure enthält, in einer Elektrolysezelle mit einer Anode und einer Kathode umfasst, wobei die Anode eine leitfähige Diamantelektrode umfasst.

3. Verfahren nach Anspruch 1, weiterhin umfassend das elektrochemische oxidative Zersetzen der organischen Verbindung.

4. Verfahren nach Anspruch 2, wobei die Oxosäure mindestens eine Säure umfasst, ausgewählt aus der Gruppe, bestehend aus Schwefelsäure, Kohlensäure, Essigsäure, Borsäure, Phosphorsäure und Salzen davon, und wobei die Persäure mindestens eine Säure umfasst, ausgewählt aus der Gruppe, bestehend aus Peroxoschwefelsäure, Peroxokohlensäure, Peroxoessigsäure, Peroxoborsäure, Peroxophosphorsäure und Salzen davon.

5. Verfahren nach Anspruch 1 oder 2, umfassend das Zugeben einer Oxosäure oder eines Salzes davon in einer Menge, so dass die Konzentration der Oxosäure in der zu behandelnden Flüssigkeit weniger als 0,5 Mol/l beträgt.

6. Verfahren nach Anspruch 2, umfassend das Zugeben einer alkalischen Substanz in einer Menge, so dass die Konzentration der alkalischen Substanz in der zu behandelnden Flüssigkeit weniger als 0,5 Mol/l beträgt.

## Revendications

1. Méthode de décomposition d'un composé organique contenu dans un liquide à traiter qui comprend l'addition d'au moins un oxoacide au liquide à traiter, la synthèse électrochimique d'au moins un peracide à partir de l'oxoacide et la décomposition du composé organique par oxydation par le peracide, dans laquelle ladite étape pour la synthèse électrochimique du peracide comprend l'électrolyse du liquide à traiter contenant un oxoacide avec une cellule électrolytique comprenant une anode et une cathode, ladite anode comprenant une électrode en diamant conducteur,
dans laquelle l'oxoacide est un ou plusieurs acides choisis parmi l'acide carbonique, l'acide phosphorique et leurs sels.

2. Méthode de décomposition d'un composé organique contenu dans un liquide à traiter qui comprend l'addition d'un alcali au liquide à traiter, la génération électrochimique de dioxyde de carbone à partir du composé organique par décomposition oxydante pour obtenir de l'acide carbonique en tant qu'oxoacide à partir du dioxyde de carbone, la synthèse électrochimique d'un peracide à partir de l'oxoacide et la décomposition oxydante du composé organique par le peracide, dans laquelle ladite étape pour la synthèse électrochimique du peracide comprend l'électrolyse du liquide à traiter contenant un oxoacide avec une cellule électrolytique comprenant une anode et une cathode, ladite anode comprenant une électrode en diamant conducteur.

3. Méthode selon la revendication 1, comprenant en outre la réalisation de la décomposition électrochimique par oxydation du composé organique.

4. Méthode selon la revendication 2, dans laquelle l'oxoacide est un ou plusieurs acides choisis dans le groupe constitué par l'acide sulfurique, l'acide carbonique, l'acide acétique, l'acide borique, l'acide phosphorique et leurs sels, et le peracide est un ou plusieurs acides choisis dans le groupe constitué par l'acide peroxosulfurique, l'acide peroxocarbonique, l'acide peroxoacétique, l'acide peroxoborique, l'acide peroxophosphorique et leurs sels.

5. Méthode selon la revendication 1 ou 2, qui comprend l'addition d'un oxoacide ou d'un de ses sels en une quantité telle que la concentration de l'oxoacide dans le liquide à traiter soit inférieure à 0,5 mole/litre.

6. Méthode selon la revendication 2, qui comprend l'addition d'un alcali en une quantité telle que sa concentration dans le liquide à traiter soit inférieure à 0,5 mole/litre.
